Europäisches Patentamt

European Patent Office

Office européen des brevets

(19)

(11) Numéro de publication: **0 1 1 5 980**
**B1**

(12) **FASCICULE DE BREVET EUROPEEN**

(45) Date de publication du fascicule du brevet:
14.05.86

(51) Int. Cl.⁴: **F 16 D 55/224**

(21) Numéro de dépôt: **84400065.3**

(22) Date de dépôt: **12.01.84**

(54) **Frein à disque.**

<table>
<tr><td>(30) Priorité: <b>12.01.83 FR 8300388</b></td><td>(73) Titulaire: <b>BENDIX France, 126, rue de Stalingrad,<br>F-93700 Drancy (FR)</b></td></tr>
<tr><td>(43) Date de publication de la demande:<br><b>15.08.84 Bulletin 84/33</b></td><td>(72) Inventeur: <b>Tourneur, Roger, 2 rue Jules Valles,<br>F-77340 Pontaut Combault (FR)</b></td></tr>
<tr><td>(45) Mention de la délivrance du brevet:<br><b>14.05.86 Bulletin 86/20</b></td><td>(74) Mandataire: <b>Poidatz, Emmanuel et al, Service Brevets<br>Bendix 44 rue François 1er, F-75008 Paris (FR)</b></td></tr>
<tr><td>(84) Etats contractants désignés:<br><b>DE GB IT SE</b></td><td></td></tr>
<tr><td>(56) Documents cités:<br><b>EP - A - 0 035 946<br>FR - A - 1 316 440<br>FR - A - 2 378 209<br>FR - A - 2 409 423<br>FR - A - 2 412 752<br>GB - A - 2 014 674</b></td><td></td></tr>
</table>

ACTORUM AG

## Description

La présente invention concerne un frein à disque du type comprenant un étrier coulissant disposé par-dessus une partie périphérique d'un disque de frein et qui présente, d'une part, une ouverture périphérique rectangulaire de passage délimitée par deux bords de guidage parallèles à l'axe dudit disque et par deux bords parallèles aux faces latérales dudit disque et, d'autre part, des faces d'appui et de guidage parallèles au plan radial passant par le centre de ladite ouverture de passage et situées de part et d'autre du disque de frein au moins approximativement à l'aplomb des bords de guidage, deux patins de friction disposés dans l'étrier de part et d'autre du disque de frein accrochés par leurs becs d'appui extrêmes sur les bords de guidage et reposant contre les faces d'appui et de guidage de l'étrier, une clavette de verrouillage susceptible d'être introduite dans l'intervalle délimité par un bord de guidage et les becs d'appui adjacents des patins et servant à empêcher tout mouvement radial intempestif de ces derniers, un support fixe solidaire d'un châssis et servant d'appui à l'étrier, deux colonnettes de support et de guidage parallèles à l'axe du disque, solidaires du support fixe et guidant l'étrier par des paliers correspondants formés dans ledit étrier, ainsi qu'un moteur de commande monté sur la partie intérieure de l'étrier et susceptible de solliciter le patin intérieur en direction du patin extérieur qui prend appui contre le nez d'étrier.

Ce type de frein à disque est connu par exemple, par le brevet français 2 409 423. Le guidage de l'étrier par deux colonnettes nécessite d'abord une grande précision d'usinage des parties glissant les unes par rapport aux autres ainsi qu'un dimensionnement important des colonnettes puisqu'elles servent à transmettre au support fixe le couple de freinage reçu par les patins de friction et encaissé ensuite par l'étrier.

Pour éviter les inconvénients liés à l'emploi d'une paire de colonnettes, on a également proposé dans le brevet français 1 316 440 de monter l'étrier de façon flottante dans les échancrures alignées parallèlement à l'axe du disque de frein et ménagés dans deux plaques de support parallèles fixes disposées de part et d'autre du disque de frein et réunies entre elles, au-dessus dudit disque, par deux tôles cylindriques de liaison, des ressorts à lames étant interposés entre chaque flanc latéral d'une échancrure et une extrémité frontale ou arrière d'un patin de friction. Lorsque les patins sont serrés contre le disque de frein, celui-ci fait pivoter l'étrier jusqu'à ce que ce dernier porte par l'intermédiaire des parties de ressort correspondantes contre les flancs latéraux situés du côté aval des échancrures, côté aval pris dans le sens de rotation du disque de frein. Ce montage flottant de l'étrier conduit à un débattement important de l'étrier qui est projeté violemment contre les ressorts et ensuite les flancs latéraux correspondants des échancrures des plaques de support notamment en cas de freinage brusque. En raison de l'interposition de la partie en boucle des ressorts de suspension, ceux-ci encaissent en premier les efforts brusques et cassent fréquemment. Dès lors, l'étrier n'est plus maintenu correctement et risque de se bloquer dans une position oblique néfaste à tout freinage correct et efficace.

Le but de la présente invention est de supprimer les inconvénients précités et de proposer un frein à disque notamment du type initialement mentionné qui, tout en étant d'un encombrement réduit en particulier au niveau des colonnettes permette d'assurer un freinage correct sans déformation inadmissible des organes constitutifs du frein.

Ce but est atteint conformément à l'invention du fait que par ses extrémités frontale et arrière l'étrier est placé sans jeu notable entre une butée avant et une butée arrière, que chacune de ces butées s'étend parallèlement à l'axe du disque de frein au-dessus de celui-ci sur une longueur au moins égale à la largeur de l'espace occupé par les deux patins de friction et que chacune de ces butées est solidaire d'un support fixe latéral prévu sur le côté intérieur du disque de frein.

Grâce à cette conception, le couple de freinage est absorbé en partie par l'une des butées et le support fixe correspondant et en partie par les deux colonnettes et leur support fixe. On comprendra aussi que de ce fait, à charge maximale égale, les colonnettes peuvent avoir des dimensions réduites et que la répartition de la charge évite de tordre ou déformer les colonnettes. Il s'ensuit encore que les patins travaillent parallèlement au disque de frein de sorte que l'effet de freinage est uniforme.

Les deux butées arrière et avant peuvent être prévues chacune sur un bras de support latéral solidaire du support fixe et ce support fixe peut également servir d'appui aux colonnettes de l'étrier.

Par ailleurs, pour assurer une insertion précise et pratiquement sans jeu, de l'étrier entre les deux butées, il est avantageux de prévoir sur la face frontale et la face arrière de l'étrier destinées à coopérer avec une butée correspondante, deux têtes d'appui latérales situées en face des extrémités de chaque butée en forme de barre.

L'objet de l'invention sera décrit ci-après sous forme d'un exemple de réalisation illustré par les dessins annexés sur lesquels:

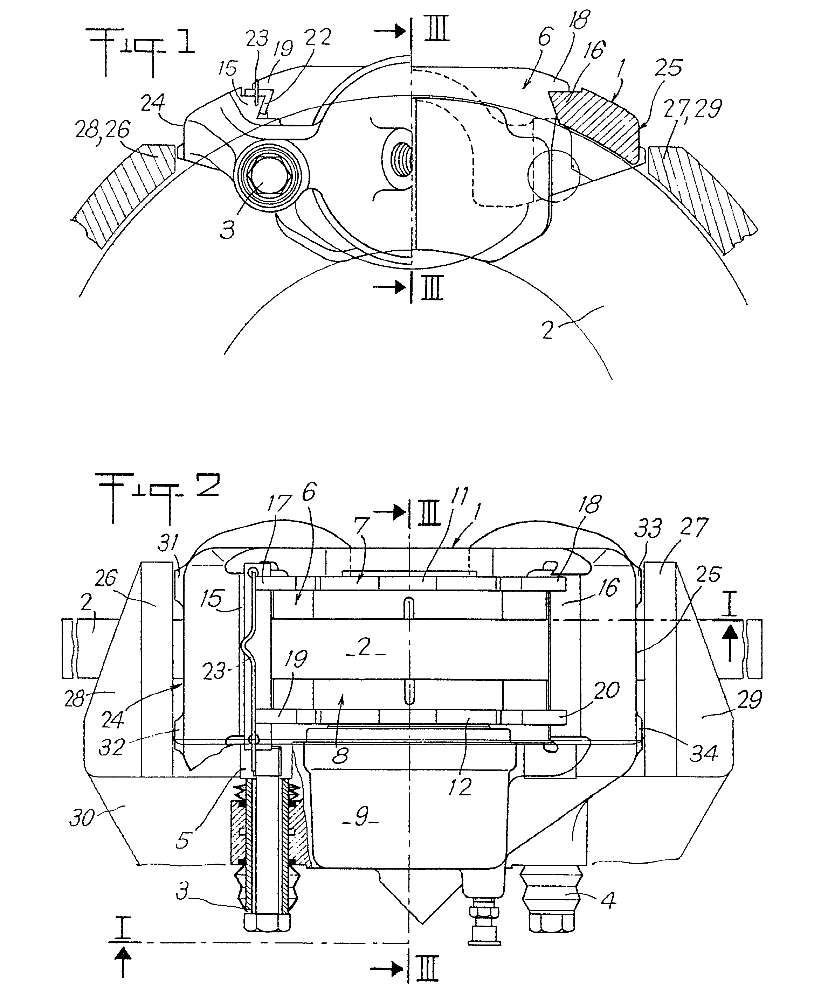

la figure 1 est une vue latérale en élévation du frein à disque partiellement en coupe verticale suivant la ligne I-I de la figure 2,

la figure 2 est une vue en plan du frein à disque avec arrachement partiel au niveau d'une colonnette, et

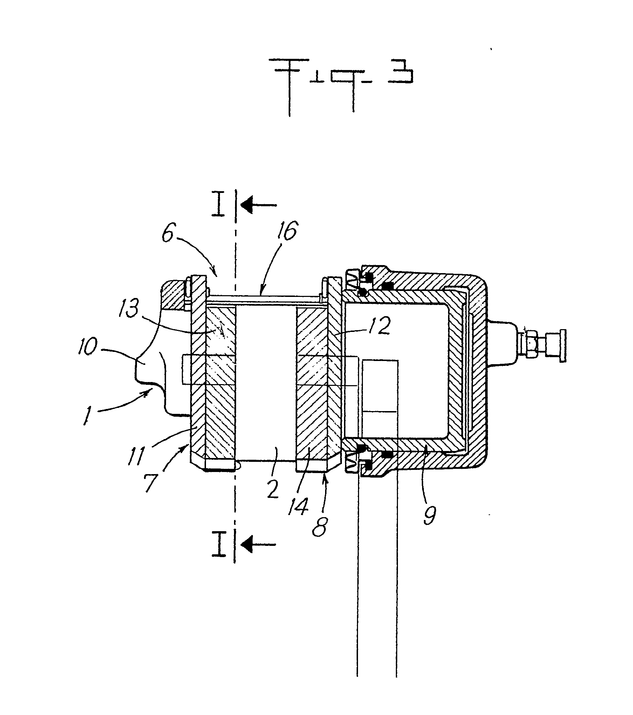

la figure 3 est une vue en élévation d'une coupe radiale du frein à disque suivant la ligne III-III des figures 1 et 2.

Le frein à disque tel que représenté sur les dessins annexés comporte un étrier 1 disposé à cheval par-dessus une partie de la périphérie d'un disque de frein 2 mobile en rotation autour d'un axe non représenté. Près de ses deux extrémités avant et arrière, l'étrier 1 est monté coulissant par l'intermédiaire de deux colonnettes 3, 4 solidaires d'un support fixe 5 dans les paliers correspondants formés dans l'étrier 1 de façon à pouvoir coulisser parallèlement à l'axe du disque de frein 2. L'étrier 1 comporte une ouverture périphérique de montage 6 qui est de forme rectangulaire et qui est ménagée dans l'étrier 1 pour permettre le passage de la partie active des patins de friction extérieur 7 et intérieur 8. Le patin intérieur 8 coopère directement avec un moteur de commande 9 incorporé dans l'étrier 1 tandis que le patin extérieur coopère indirectement avec ledit moteur 9 en s'appuyant contre le nez 10 dudit étrier 1. Chaque patin de friction 7 et 8 comprend du côté de l'étrier 1 une plaque porte-garniture 11, 12 réalisée en un métal approprié ainsi que, du côté du disque de frein 2, une garniture de friction 13, 14 s'appliquant contre la face latérale correspondante du disque de frein 2 lorsque le moteur 9 est actionné.

Les côtés avant et arrière de l'ouverture de passage 6 de l'étrier 1 sont délimités respectivement par un bord de guidage 15 et 16 qui s'étend parallèlement à l'axe du disque de frein et qui coopère avec l'un des deux becs d'appui 17, 18 ou 19, 20 de la plaque porte-garniture 11 ou 12 du patin extérieur 7 ou du patin intérieur 8.

Les deux patins de friction 7 et 8 sont disposés dans l'étrier 1 de part et d'autre du disque de frein 2 et sont accrochés sur l'étrier par l'intermédiaire des becs d'appui extrêmes 17, 18 et 19, 20 épousant la forme en V des bords de guidage 15 et 16. Ces patins 7 et 8 sont bloqués contre tout déplacement radial dans l'étrier 1 à l'aide d'une clavette de verrouillage 22 introduite dans l'intervalle délimité par un bord de guidage, par exemple 15, et les becs d'appui adjacents 17 et 19 des patins 7 et 8, une goupille 23 coopérant avec la clavette 22 et le bord de guidage correspondant 15, pour empêcher tout déplacement intempestif de ladite clavette 22. Il convient de préciser que la structure intérieure de l'étrier et le système de montage et de blocage des patins par rapport à l'étrier ne font pas partie de la présente invention et de surcroît sont décrits en détail dans le brevet français 2 409 423 de sorte qu'il n'est pas nécessaire de décrire davantage la structure générale du frein à disque faisant l'objet de la présente invention.

Selon l'invention, l'étrier 1 est placé, par ses extrémités frontales 24 et 25, sans jeu notable, entre une butée avant 26 et une butée arrière 27. Ces butées 26, 27 ont la forme d'une barre transversale s'étendant parallèlement à l'axe du disque de frein 2 au-dessus de celui-ci sur une longueur au moins égale à la largeur de l'espace occupé par les deux patins de friction 7 et 8. Chacune de ces butées 26, 27 est portée par un bras latéral 28, 29 solidaire d'un support fixe latéral 30 prévu sur les côtés intérieurs du disque de frein 2.

Le support fixe 30 pour les bras de support latéraux 28 et 29 des butées 26 et 27 peut être constitué par un support fixe indépendant ou peut être confondu avec le support fixe 5 dans lequel sont montées les colonnettes 3 et 4 de coulissement de l'étrier 1. Afin d'éviter tout jeu important entre l'étrier 1 et les deux butées 26 et 27, on prévoit sur la face frontale 24 et sur la face arrière 25 de l'étrier 1 deux têtes d'appui latérales 31, 32 et 33, 34 qui sont situées en face des extrémités de chaque butée 26 et 27. En particulier, le support fixe 30 et le support fixe 5 peuvent être réalisés directement dans le porte-fusée du véhicule.

Le mode de réalisation précédemment décrit peut subir un certain nombre de modifications sans que l'on sorte pour cela du cadre de protection défini par les modifications annexées. Parmi les variantes on peut envisager le montage d'un manchon élastique entre les colonnettes et les alésages correspondants formant paliers dans l'étrier. Dans cette variante l'étrier par compression desdits manchons, viendra systématiquement en contact avec les butées 26, 27 pour transmettre intégralement le couple de freinage au support fixe 30, les colonnettes ne prennent dans ce cas pratiquement aucun couple et ne servent qu'au coulissement de l'étrier au fur et à mesure de l'usure des éléments de friction 6 et 8.

**Revendications**

1. Frein à disque du type comprenant un étrier coulissant (1) disposé par-dessus une partie périphérique d'un disque de frein (2) et qui présente, d'une part, une ouverture périphérique rectangulaire (6) de passage pour deux patins de friction (7, 8) disposés dans l'étrier (1) de part et d'autre du disque de frein (2) accrochés par leurs becs d'appui extrêmes (17, 18, 19, 20) sur les bords de guidage (15, 16) et reposant contre les faces d'appui et de guidage de l'étrier (1), un support fixe (5, 30) solidaire d'un châssis et servant d'appui à l'étrier (1), deux colonnettes (3, 4) de support et de guidage parallèles à l'axe du disque (2), solidaires du support fixe (5) et guidant l'étrier (1) par des paliers correspondants formés dans ledit étrier (1) ainsi qu'un moteur de commande (9) monté sur la partie intérieure de l'étrier (1) et susceptible de solliciter le patin intérieur (8) en direction du patin extérieur (7) qui prend appui contre le nez d'étrier, caractérisé en ce que par ses extrémités frontale (24) et arrière (25), l'étrier (1) est placé sans jeu notable entre une butée avant (26) et une butée arrière (27), que chacune de ces butées (26, 27) s'étend parallèlement à l'axe du disque de frein (2) au-dessus de celui-ci sur une longueur au moins égale à la largeur de l'espace occupé par les deux patins de friction (7, 8) et que chacune de ces butées est solidaire d'un support fixe latéral (30) prévu sur le côté intérieur du disque de frein (2).

2. Fein à disque selon la revendication 1, caractérisé en ce que les deux butées avant et arrière (26, 27) sont prévues chacune sur un bras de support latéral (28, 29) solidaire du support fixe (30).

3. Frein à disque selon l'une des revendications 1 et 2, caractérisé en ce que le support fixe (30) des butées avant et arrière (26, 27) pour l'étrier (1) sert également de support fixe (5) pour les colonnettes (3, 4) de coulissement dudit étrier (1).

4. Frein à disque selon l'une des revendications 1 à 3, caractérisé en ce que sur la face frontale (24) et la face arrière (25) de l'étrier (1) destinées à coopérer avec une butée correspondante (26 ou 27) sont prévues deux têtes d'appui latérales (31, 32 ou 33, 34) situées en face des extrémités de chaque butée (26, 27).

5. Frein à disque selon l'une des revendications 1 à 4, caractérisé en ce que chaque butée (26, 27) présente la forme d'une barre.

## Patentansprüche

1. Scheibenbremse mit einem schwimmend gelagerten Bremssattel (1), der über einem Umfangsabschnitt einer Bremsscheibe (2) angeordnet ist und auf einer Seite eine rechteckige Umfangsöffnung (6) zur Aufnahme zweier Bremsbacken (7, 8) aufweist, die in dem Bremssattel (1) beidseitig zu der Bremsscheibe (2) angeordnet sind, mit ihren schnabelförmigen Endanschlägen (17, 18, 19, 20) an dem Führungsrändern (15, 16) eingehängt sind und an Anlage- und Führungsflächen des Bremssattels (1) anliegen, einem ortsfesten Träger (5, 30), der mit einem Fahrzeugrahmen fest verbunden ist und zur Abstützung der Bremsscheibe (2) parallele Trag- und Führungsbolzen (3, 4), die mit dem ortsfesten Träger (5) fest verbunden sind und den Bremssattel (1) durch entsprechende Lager im Bremssattel (1) sowie einen Bremsmotor (9) führen, der am Innenabschnitt des Bremssattels (1) angebracht ist und den inneren Bremsbacken (8) in Richtung auf den äusseren Bremsbacken (7) drücken kann, der seinerseits an dem Aussenabschnitt des Bremssattels abgestützt ist, dadurch gekennzeichnet, dass der Bremssattel (1) mit seinen vorderen (24) und hinteren (25) Enden ohne nennenswertes Spiel zwischen einem vorderen Anschlag (26) und einem hinteren Anschlag (27) eingesetzt ist, dass jeder dieser Anschläge (26, 27) parallel zur Achse der Bremsscheibe (2) oberhalb derselben über einer Länge verläuft, die mindestens gleich der Breite des von den beiden Bremsbacken (7, 8) eingenommenen Raumes ist, und dass jeder dieser Anschläge mit einem seitlichen ortsfesten Träger (30) fest verbunden ist, der auf der Innenseite der Bremsbacke (2) vorgesehen ist.

2. Scheibenbremse nach Anspruch 1, dadurch gekennzeichnet, dass die beiden Anschläge, d.h. der vordere und rückwärtige Anschlag (26, 27), jeweils an einem seitlichen Tragarm (28, 29) vorgesehen sind, der mit dem ortsfesten Träger (30) fest verbunden ist.

3. Scheibenbremse nach einem der Ansprüche 1 und 2, dadurch gekennzeichnet, dass der ortsfeste Träger (30) des vorderen und hinteren Anschlages (26, 27) für den Bremssattel (1) gleichzeitig als ortsfester Träger (5) für die Gleitbolzen (3, 4) des Bremssattels (1) dient.

4. Scheibenbremse nach einem der Ansprüche 1-3, dadurch gekennzeichnet, dass an der vorderen Fläche (24) und an der hinteren Fläche (25) des Bremssattels (1), die mit einem entsprechenden Anschlag (26 od. 27) zusammenwirken, zwei seitliche Abstützköpfe (31, 32 od. 33, 34) vorgesehen sind, die gegenüber den Enden jedes Anschlages (26, 27) angeordnet sind.

5. Scheibenbremse nach einem der Ansprüche 1-4, dadurch gekennzeichnet, dass jeder Anschlag (26, 27) stabförmig ausgebildet ist.

## Claims

1. A disc brake of the type comprising a sliding caliper (1) disposed above a peripheral portion of a brake disc (2) and presenting on one side a rectangular peripheral opening (6) for the passage of two friction pads (7, 8) disposed in the caliper (1) on opposite sides of the brake disc (2), the friction pads being supported by their abutments ends (17, 18, 19, 20) on guide edges (15, 16) and resting against support and guide surfaces of the caliper (1), a fixed support (15, 30) fixedly connected to a chassis and serving as a support for the caliper (1), a pair of support and guide columns (3, 4) parallel to the axis of the disc (2) fixedly connected to the fixed support (5) and guiding the caliper (1) by corresponding bearings formed in said caliper (1) by corresponding bearings formed in said caliper (1), as well as an actuating motor (9) mounted on the interior portion of the caliper and adapted to urge the interior brake pad (8) towards the exterior brake pad (7) which engages the exterior portion of the caliper, characterized in that the caliper (1) has its front (24) and rear (25) extremeties disposed between a front abutment (26) and a rear abutment (27) without noticeable play, in that each of these abutments (26, 27) extend parallel to the axis of the brake disc (2) above the latter over a length at least equal to the width of the space occupied by the two friction pads (7, 8), and in that each of these abutments is fixedly connected to a lateral fixed support (30) provided on the interior side of the brake disc (2).

2. The brake disc of claim 1, characterized in that the two front and rear abutments (26, 27) are each provided on a lateral support arm (28, 29) fixedly connected to the fixed support (30).

3. The brake disc according to any of claims 1 and 2, characterized in that the fixed support (30) of the front and rear abutments (26, 27) for the caliper (1) equally serves as the fixed support (5) for the sliding columns (3, 4) of said caliper (1).

4. The brake disc of any of claims 1 to 3, characterized in that on the front face (24) and rear face (25) of the caliper (1) adapted to cooperate with a corresponding abutment (26 or 27) there are provided two lateral support heads (31, 32 or 33, 34) situated opposite the ends of each abutment (26, 27).

5. The brake disc of any of claims 1 to 4, characterized in that each abutment (26, 27) is of bar shape.

Fig. 1

Fig. 2

Fig. 3